# EUROPÄISCHE PATENTSCHRIFT

(11) **EP 1 246 500 B1**
(45) Veröffentlichungstag und Bekanntmachung des Hinweises auf die Patenterteilung: **16.03.2011**
(21) Anmeldenummer: 02002226.5
(22) Anmeldetag: 30.01.2002
(51) Int. Cl.: H04Q 9/00, G01D 4/00

(54) **Verfahren zum Abschalten zeitweise nicht benötigter Funktionen eines elektronischen Verbrauchserfassungsgeräts**
Method for switching off temporarily not necessary functions of an electronic utility meter
Procédé pour desactiver temporairement les fonctions pas nécessaires d'un compteur de consommation électronique

(30) Priorität: 28.03.2001 DE 10115552; 09.05.2001 DE 10122537; 01.09.2001 DE 10142964
(43) Veröffentlichungstag der Anmeldung: 02.10.2002
(73) Patentinhaber: Techem Energy Services GmbH, 65760 Eschborn (DE)
(72) Erfinder: Hansing, Martin, Dipl.-Ing., 65931 Frankfurt am Main (DE)
(74) Vertreter: KEIL & SCHAAFHAUSEN Patentanwälte

(56) Entgegenhaltungen:
- DE-A1- 4 235 187
- DE-A1- 19 905 316
- DE-U1- 29 717 504
- GB-A- 2 313 462
- US-A- 5 617 084
- US-A- 5 673 252

## Beschreibung

Die Erfindung betrifft ein Verfahren zum Abschalten zeitweise nicht benötigter Funktionseinheiten mit implementierten Funktionen eines elektronischen Verbrauchsdatenerfassungsgeräts mit drahtloser Übertragung der Verbrauchsdaten gemäß dem Oberbegriff des Anspruchs 1, bei dem die Datenübertragung zeitgesteuert an- und abgeschaltet wird, sowie ein Verbrauchsdatenerfassungsgerät zur Durchführung des Verfahrens gemäß dem Oberbegriff des Anspruchs 5.

Zur Zeit gibt es zahlreiche elektronische Verbrauchserfassungsgeräte am Markt. Viele dieser Geräte besitzen eine nicht auswechselbare Langzeitbatterie (Lithiumzelle) zur Stromversorgung des Geräts. So gibt es Geräte, die manuell über eine Anzeige (LCD/LED), mit einem Servicegerät über eine optische oder elektrische Schnittstelle oder drahtlos per Funk abgelesen werden. Die Geräte stellen dabei auch dauerhaft Funktionen zur Verfügung, die nur in Servicefällen oder zur Ablesung benötigt werden. Die Gerätefunktionen sind in der Regel als Software implementiert und laufen in einer elektronischen Steuereinheit ab (Mikrocontroller oder Mikroprozessor). Jede dieser Funktionen hat ihren Anteil am Gerätestromverbrauch und damit bei gegebener Batteriekapazität Einfluss auf die Lebensdauer.

Meistens bleiben bei diesen elektronischen Erfassungsgeräten auch Funktionen, die tatsächlich nur selten benötigt werden, ununterbrochen über die gesamte Lebensdauer der Batterien aktiv. Gemessen am Bedarf haben sie damit einen überhöhten Anteil am Batterieverbrauch. Dies wirkt sich entweder nachteilig auf die Batterielebensdauer oder die benötigte Batteriekapazität aus. Solche Funktionen sind z. B. Servicefunktionen, die lediglich bei der Inbetriebnahme des Gerätes benötigt werden, oder Anzeige- bzw. Datenübertragungsfunktionen, die nur zum Zeitpunkt der Ablesung benötigt werden.

Da der genaue Ablesezeitpunkt häufig nicht genau bekannt ist, haben Geräte mit Funkdatenübertragung eine sehr hohe Sendehäufigkeit. Um den Strombedarf für das häufige Senden einzuschränken, gibt es bereits Lösungen, bei der die Sender zum Zwecke der Datenübertragung nur für einen gewissen Zeitraum nach Erreichen eines Stichtags angeschaltet werden (z. B. 1 x jährlich für einen Tag). Der Nachteil einer solchen Lösung ist: verpasst der Ableser, der den Verbrauchswert bspw. mit einem mobilen Datenempfänger auslesen möchte, diesen Zeitraum, in dem der Sender eingeschaltet ist, dann muss er (unter Umständen ein Jahr) warten, bis er eine erneute Chance hat, die Erfassungsgeräte per Funk auszulesen. Ein weiterer Nachteil einer solchen Lösung mit kurzzeitigem Sendereinschalten in großen Zeitabständen ist, dass sich zeitnahe Zwischenablesungen schlecht realisieren lassen. Es besteht immer das Problem, dass sich der Ableser pünktlich zur Sendereinschaltphase in Funkreichweite der Verbrauchsdatenerfassungsgeräte befinden muss. Entsprechendes gilt für Verbrauchsdatenerfassungsgeräte mit einer optischen Schnittstelle für die Datenübertragung.

Nahezu alle elektronischen Verbrauchsdatenerfassungsgeräte besitzen eine Anzeigeeinheit, z. B. in Form eines LCD-Displays, für die Darstellung von Verbrauchs- und Gerätedaten. Diese Anzeigen dienen dem Kundendienstpersonal für die visuelle Ablesung der Geräte sowie dem Nutzer zur Verbrauchkontrolle. Deswegen kann die Anzeige zur Stromersparnis nicht einfach zeitgesteuert abgeschaltet werden, da dem Nutzer sonst zeitweise die Kontrollmöglichkeit fehlen würde. Außerdem wäre es für den Nutzer sehr irritierend, wenn die Anzeige für eine gewisse Zeit ausfiele. Bisherige bekannte Verfahren mit automatischer Abschaltung des Displays haben daher ein Bedienelement am Gerät, über das der Nutzer die Anzeige aktivieren kann. Nachteil einer solchen Lösung ist, dass es sich auf Verbrauchserfassungsgeräte schlecht anwenden lässt, da die Geräte häufig an schwer zugänglichen Stellen montiert werden. Zum anderen wird das Gerät durch ein Bedienelement bei der Entwicklung und Produktion unnötig verteuert, wenn das Bedienelement ausschließlich der Aktivierung des Displays dient. Dies wäre beispielsweise bei elektronischen Heizkostenverteilern mit und ohne drahtloser Datenübertragung der Fall. Bei anderen Gerätegattungen (z. B. Fahrradcomputer) wird das Ein- und Ausschalten der Anzeige von dem Fortschritt einer Zählung abhängig gemacht. Dabei aktiviert sich die Anzeige automatisch, sobald ein Zählfortschritt erfolgt. Dieses Verfahren lässt sich auf Verbrauchserfassungsgeräte der beschriebenen Art nicht anwenden, da auch ein geringer oder gar kein Verbrauchsfortschritt eine Information darstellt, die der Nutzerkontrolle dient. Darüber hinaus ist es einem Ableser nicht zumutbar, auf einen Verbrauchsfortschritt zu warten, um das Gerät ablesen zu können.

Die US 5,617,084 beschreibt ein Kommunikationsgerät zur Verbrauchskostenerfassung, das die erfassten Verbrauchswerte mittels einer Funkkommunikation an einen entfernten Empfänger überträgt. Die Verbrauchswerte werden in einem pseudozufälligen Zeitintervall übertragen. Zur Energieeinsparung wird vorgeschlagen, während der Nacht die Übertragung der Verbrauchswerte abzuschalten,

Aus der GB 2 313 462 A ist ein ähnliches Verfahren zum Abschalten zeitweise nicht benötigter Funktionseinheiten bekannt, wobei der Sender in zuvor festgelegten, täglichen Sendezeitfenstern die Verbrauchswerte aussendet. Voraussetzung hierfür ist allerdings, dass in dem Gerät eine Echtzeituhr (Real Time Clock) mit ausreichender Genauigkeit zur Verfügung steht (Seite 9, Zeilen 6 bis 9).

Bei dem in der DE 199 05 316 A1 beschriebenen Datenübertragungssystem, bei dem Daten von einem Sender in vorgegebenen Zeitabständen gesendet und von einem Empfänger empfangen werden, ist der Empfänger mit einer Zeitsteuerung ausgestattet, um den Empfänger zu den Sendezeitpunkten auf Empfang zu schalten. Um Zeitgebertoleranzen auszugleichen, wird ein Toleranzzeitinter vall für den Empfang festgelegt. Dieses wird bestimmt, indem die theoretisch maximale relative Zeittoleranz mit der Zeit seit dem letzten erfolgreichen Empfang multipliziert wird.

Die Aufgabe der Erfindung ist es, Möglichkeiten zur effektiven Stromersparnis bei Verbrauchsdatenerfassungsgeräten vorzuschlagen, ohne dass das Auslesen der Daten erschwert oder der Nutzerkomfort beeinträchtigt wird,

Diese Aufgabe wird erfindungsgemäß mit einem Verfahren gemäß den Merkmalen des Anspruchs 1 gelöst. Es ist vorgesehen, dass das zeitgesteuerte An- und Abschalten vom Wochentag und/oder der Tageszeit abhängt. Der Erfindunggedanke beruht auf der Erkenntnis, dass die drahtlose Datenübertragung zu bestimmten wiederkehrenden Zeiten nicht benötigt wird. Es kann z. B. davon ausgegangen werden, dass aufgrund geregelter Arbeitszeiten keine Ablesung an Feiertagen und nachts erfolgt. Mittels einer Zeitsteuerung kann der Sendebetrieb zu diesen Zeiten abgeschaltet werden. Eine geeignete

Zeitschaltung kann das Senden von Daten beispielsweise morgens um 06:00h einschaltet und abends um 20:00h abschalten. An Sonntagen soll wegen der Feiertagsregelung gar nicht gesendet werden. In diesem Beispiel ergibt sich eine Ersparnis von 6 x 10 + 24 = 84 Stunden pro Woche. Das ist eine Reduktion um etwa 50% gegenüber einem 24-stündigen Dauersendebetrieb.

Um alterungs-, temperatur- und fertigungsbedingte Ungenauigkeiten von Zeitgeberelementen auszugleichen, ist erfindungsgemäß vorgesehen, dass der Anschaltzeitpunkt der Datenübertragung täglich um eine vorgebbare Zeitspanne vorgezogen und der Abschaltzeitpunkt täglich um eine vorgebbare Zeitspanne nach hinten verschoben wird.

Zur einfachen Parametrisierung können die An- und Abschaltzeitpunkte für die Datenübertragung und/oder die vorgebbare Zeitspanne in dem Verbrauchsdatenerfassungsgerät vorzugsweise frei einstellbar sein, insbesondere durch Programmierung über eine Serviceschnittstelle und/oder bei der Herstellung.

Gemäß einer Variante des vorgeschlagenen Verfahrens bei elektronischen Verbrauchsdatenerfassungsgeräten mit einer Anzeige wird zusätzlich vorgeschlagen, dass die Anzeige in Abhängigkeit von Umgebungsvariablen des Verbrauchsdatenerfassungsgeräts, insbesondere Helligkeit und/oder Bewegung, an- und abgeschaltet wird. Wenn das Verbrauchsdatenerfassungsgerät feststellen kann, dass es in seiner Umgebung dunkel ist oder keine Bewegung stattfindet, kann davon ausgehen werden, dass die Anzeige nicht benötigt wird, weil sich niemand in der Nähe des Gerätes aufhält. Die Stromersparnis ist dann besonders groß, wenn sich die Anzeige wie häufig an dunklen Stellen, bspw. einem Heizungskeller, Abstellraum oder dgl., befindet. Bspw. wird nach Unterschreiten eines Helligkeits-Grenzwerts oder einer längeren Zeit ohne Nachweis einer Bewegung die Anzeige deaktiviert, um den anteiligen Batteriestrom einzusparen. Für diese Feststellung wird lediglich ein Umgebungssensor (optischer Sensor oder Bewegungssensor) benötigt.

Um ein regelmäßiges, sich häufig wiederholendes Messen zu vermeiden, können die Umgebungsvariablen erfindungsgemäß ereignisgesteuert gemessen werden,

Besonders vorteilhaft lassen sich beide erfindungsgemäßen Verfahren kombinieren, um eine besonders hohe Stromersparnis zu erreichen.

Ferner betrifft die vorliegende Erfindung ein Verbrauchsdatenerfassungsgerät gemäß den Merkmalen des Anspruchs 5 mit einer Steuereinrichtung, insbesondere einem Mikrocontroller oder Mikroprozessor, das eine Zeitsteuerung und ggf. ein Messsystem zur Messung von Umgebungsvariablen, insbesondere von Helligkeit und/oder Bewegung, aufweist, wobei die Steuereinrichtung programmtechnisch zur Durchführung zumindest eines der vorbeschriebenen Verfahren eingerichtet ist.

In einer bevorzugten Ausführungsform der vorliegenden Erfindung weist das Messsystem des Verbrauchsdatenerfassungsgeräts zur Messung der Helligkeit einen auch zum optischen Datenempfang geeigneten optischen Empfänger, insbesondere einen Infrarotsensor, und einen Analog-Digital-Wandler auf. In diesem Fall kann ein Bauteil sowohl als Helligkeitssensor als auch zur Übertragung von Daten verwendet werden, so dass zusätzliche Kosten eingespart werden können,

Nachfolgend werden die erfindungsgemäßen Verfahren anhand von Ausführungsbeispielen und der Zeichnung detailliert beschrieben. Dabei ergeben sich aus der Beschreibung und/oder der Zeichnung weitere erfindungsgemäße Vorteile und Merkmale, unabhängig von ihrer Zusammenfassung in den Ansprüchen oder deren Rückbezügen.

Es zeigen:
- Fig. 1: die An- und Abschaltzeiten für die Übertragung von Verbrauchsdaten im Tages- und Wochenverlauf für eine Batterielebensdauer von 10 Jahren und
- Fig. 2: einen typischen Aufbau der gesendeten Funktelegramme.

Allgemein besteht auch bei Verbrauchsdatenerfassungsgeräten die Schwierigkeit darin, dass von bestimmten, selten genutzten Gerätefunktionen nicht bekannt ist, wann sie genutzt werden. Deshalb werden solche Funktionen auch nicht abgeschaltet. Es lässt sich aber für bestimmte Funktionen sagen, wann sie nicht genutzt werden. Auf diesem Gedanken basieren die vorgeschlagenen Verfahren.

Elektronische Verbrauchsdatenerfassungsgeräte mit Funksender für drahtlose Datenübertragung werden häufig für eine Walk-ln-, Walk-By- oder Drive-By-Ablesung verwendet. Dabei werden die Erfassungsgeräte mittels eines mobiles Funkempfängers durch Kundendienstpersonal von einem Fahrzeug aus (Drive-By) im Vorbeifahren oder zu Fuß (Walk-By) im Vorübergehen abgelesen, ohne dass das abzulesende Gebäude betreten werden muss. Bei diesem Ableseverfahren werden häufig über das ganze Jahr hinweg Funktelegramme ausgesendet, die zur Stromersparnis so kurz gemacht werden (einige Millisekunden), dass häufiges Senden über einen langen Zeitraum möglich ist. Eine regelmäßige Verbrauchsdatenerfassung findet im häuslichen Bereich typischerweise jährlich statt. Ausnahmen davon gibt es beispielsweise durch umzugsbedingten Nutzerwechsel auch unterjährig. Aufgrund dieser Tatsache wird zunächst erfindungsgemäß vorgeschlagen, das Jahr in eine Zeitspanne nach einem abrechnungsrelevanten Stichtag und in die übrige Zeitspanne bis zum Stichtag des Folgejahres aufzuteilen. In der Zeitspanne nach dem Stichtag (z. B. 2 Monate lang) wechseln die Erfassungsgeräte in einen sogenannten Schnellsendemodus mit stark erhöhter Sendehäufigkeit. In dieser Zeit kann eine drahtlose Ablesung der Geräte mit einem mobilen Funkempfänger sehr zügig erfolgen. Nach Ablauf der Zeitspanne des Schnellsendens wechseln die Erfassungsgeräte zeitgebergesteuert in einen sogenannten Normalsendemodus mit herabgesetzter Sendehäufigkeit. Zwischenablesungen sind nun immer noch möglich. Da der Aufwand für Zwischenablesungen zeit- und kostenmäßig seinen Schwerpunkt in der Anfahrt zu der Liegenschaft findet, fällt die etwas längere Wartezeit bis zum Empfang der Funkdaten nicht so sehr ins Gewicht. Zudem sind Zwischenablesungen nicht der Regelfall und rechtfertigen daher längere Ablesezeiten zugunsten der allgemeinen jährlichen Stichtagsablesung.

Sollen die Endgeräte für eine reibungslose Walk-In-Ablesung beispielsweise alle 30 Sekunden senden, so ergibt sich im Schnellsendemodus eine jährliche Anzahl von 1051200 Funktelegrammen. Wechselt man die Sendehäufigkeit durch die Unterscheidung in Schnellsenden und Normalsenden, und wählt man für die Dauer des Schnellsendens eine Periode von 60 Tagen (2 Monate) nach dem Stichtag und für das Normalsenden eine Periode von 305 Tagen (10 Monate) und setzt die Sendehäufigkeit dabei auf ein Zehntel herab (alle 5 Minuten senden), dann reduziert sich die Gesamtzahl der jährlichen Funktelegramme auf 172800 + 87840 = 260640 Funktelegramme, also auf etwa 25% gegenüber einem dauerhaften Schnellsenden.

Ferner wird die drahtlose Datenübertragung zu bestimmten wiederkehrenden Zeiten nicht benötigt. Es kann z. B. davon ausgegangen werden, dass aufgrund geregelter Arbeitszeiten keine Ablesung an Feiertagen und nachts erfolgt. Es ist also sinnvoll, eine Zeitsteuerung für das An- und Abschalten des Sendebetriebs vorzusehen, die das Senden von Daten morgens um 06:00h einschaltet und abends um 20:00h abschaltet. An Sonntagen und Feiertagen wird gar nicht gesendet. Dies geschieht unabhängig davon, ob sich die Geräte im Normal- oder Schnellsendebetrieb befinden. In diesem Beispiel ergibt sich eine Ersparnis von 6 x 10 + 24 = 84 Stunden pro Woche. Das ist eine Reduktion um weitere 50% gegenüber einem 24-Stundendauersendebetrieb. Die Anzahl der jährlichen Funktelegramme lässt sich damit theoretisch auf 130320 senken.

Eine praktische Schwierigkeit, die sich aus einer zeitgesteuerten Abschaltung ergibt, ist die alterungs-, temperatur- und fertigungsbedingte Ungenauigkeit von Zeitgeberelementen. Bei typischen Schwingquarzen für Uhrenzwecke (mit 32kHz Nennfrequenz) kann mit Toleranzen von +50ppm bis -100ppm gerechnet werden. Um diesen Zeitabweichungen zu begegnen, wird der tägliche Einschaltzeitpunkt um einen der negativen Toleranz entsprechenden Betrag vorgezogen und der Abschaltzeitpunkt um einen der positiven Abweichung entsprechenden Betrag nach hinten verschoben. Bei den genannten Toleranzen von -100ppm / +50ppm ergibt sich ein tägliches Vorziehen des Einschaltzeitpunkts um -8,64 Sekunden und ein späteres Abschalten um +4,32 Sekunden. Insgesamt ergibt sich damit eine tägliche Verlängerung der Sendezeitspanne um ca. 13 Sekunden. Die Toleranzen akkumulieren sich über die Lebensdauer soweit, bis eine Einschaltdauer von 24 Stunden täglich erreicht ist. Die Abschaltung reduziert sich ab diesem Zeitpunkt auf die Feiertage. Mit den vorgeschlagene Zeiten (tägliches Senden von 06:00h bis 20:00h, dann Abschalten von 10 Stunden) und den angenommene Zeitgebertoleranzen (-100ppm / +50ppm) wird dieser Zeitpunkt nach 2778 Tagen, also 7,6 Jahren erreicht. Er liegt damit bereits über der Eichgültigkeitsdauer von Wasserzählern. Die akkumulierte Ersparnis beträgt nach 5 Jahren immer noch 36% (durchschnittlich 166800 Funksendungen p. a.), nach 7,6 Jahren noch 29% (im Mittel 185050 Sendungen p. a. ) und nach 10 Jahren immer noch 24% (entspricht 198080 Aussendungen pro Jahr).

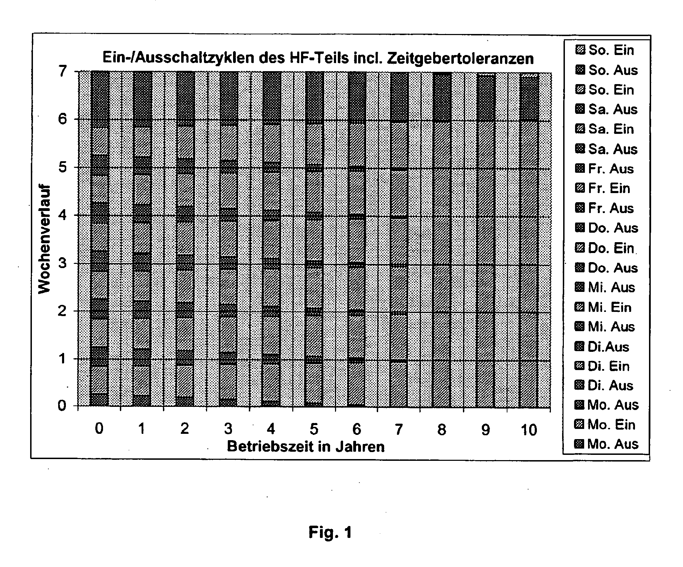

Fig. 1 veranschaulicht die täglichen An- (hell) und Abschaltzeiten (dunkel) des Funksenders im Tages- und Wochenverlauf (Zahlen 0 bis 7 für die Tage einer Woche, wobei der Bereich zwischen den Zahlen den Tagesverlauf darstellt) über eine Gerätelebensdauer von 10 Jahren. Es ist zu erkennen, wie die tägliche Abschaltzeit (dunkel) aufgrund der akkumulierten Zeitgebertoleranzen mit jedem Betriebsjahr abnimmt.

Die täglichen Ein- und Abschaltzeitpunkte, die Abschaltphase für wöchentliche Feiertage und die positiven und negativen Zeitgebertoleranzen sowie die abschaltbaren Funktionen (z. B. per Bitmaske) sind in den Verbrauchsdatenerfassungsgeräten einstellbar. Die Einstellung dieser Parameter kann jederzeit durch Programmierung der Erfassungsgeräte über eine Serviceschnittstelle und/oder während der Produktion erfolgen.

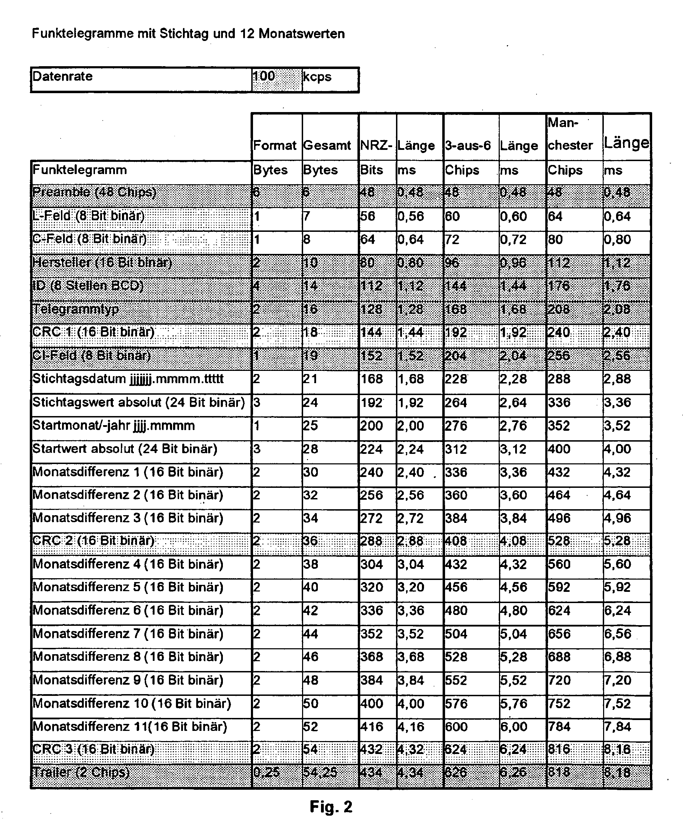

Die in Fig. 2 schematisch angegebenen Funktelegramme sind zur Übertragung von Verbrauchsdaten geeignet und lehnen sich an die internationale Norm IEC 870-5-1 Formatklasse FT 3 und den europäischen Normvorschlag der CEN TC 294 an. Darin werden geeignete Telegrammformate und Betriebsmodi für die zweckgebundene Daten- bzw. Funkübertragung beschrieben. Der allgemeine Stand der Technik bevorzugt bei der drahtlosen Übertragung von Informationen eine gleichspannungsfreie Leitungskodierung. Dies kann durch Überlagerung des Nutzdatenstroms mit einem wohldefinierten pseudozufälligen Bitstrom erfolgen. Die Gleichspannungsfreiheit des Datenstroms kann dabei nicht garantiert werden; man nähert sich ihr im statistischen Mittel nur an. Vorteil des sogenannten Data-Scrambling ist, dass es keinen Overhead erzeugt. Ein Verfahren, das Gleichspannungsfreiheit sicherstellt, ist die 3-aus-6-Kodierung, wie sie in der CEN TC 294 vorgeschlagen ist. Bei gleicher Datenrate werden hierbei 50% Overhead erzeugt. Der Manchester-Code wird in der CEN TC 294 ebenfalls als Leitungscodierung für die Funkübertragung vorgeschlagen. Der Manchester-Code erzeugt aus jedem NRZ-Bit mindestens einen Flankenwechsel. Der Overhead liegt hier bei 100% und ist damit am ungünstigsten. Der Vorteil der Manchester-Codierung liegt in der einfachen Realisierung mit wenigen Logikgattern. Fig. 2 kann entnommen werden, dass ein Funktelegramm bei einer Datenrate von 100 kcps, je nach Leitungskodierung zwischen 4,34ms und 8,18ms benötigt. Im Funktelegramm sind alle abrechnungsrelevanten Daten, auch solche für eine monatliche Zwischenablesung, enthalten. Die jährliche Sendedauer liegt damit (NRZ-Kodierung mit Data-Scrambling, Schnellsenden: 60 Tage 2x pro Min., Normalsenden: 305 Tage 12 x pro Std. und 50% Abschalten pro Woche) anfangs bei 566 Sekunden (= 09:26 min.) und im ungünstigsten Fall (keine wöchentliche Ersparnis wg. Zeitgebertoleranzen) bei 1131 Sekunden (= 18:51 min.). Die jährliche akkumulierte Sendedauer kann bei einer typischer Gerätelebensdauer auf ca. 14,5 min. abgeschätzt werden. Dies ist bei wenigen Milliwatt Sendeleistung (typisch 0 bis 10 dbm bei ca. 50mA Sendestrom) mit einer Langzeitbatterie erreichbar (10 Jahre x 14,5 min. x 50mA = ca. 120 mAh).

Ein Verbrauchserfassungsgerät mit optischer Datenübertragung besitzt eine (infrarot-) optische Schnittstelle, über die mit Hilfe eines Servicegerätes die gesammelten Verbrauchsdaten ausgelesen werden können. Solche Geräte benötigen ein Verfahren zur optischen Verbindungsaufnahme mit einem Kommunikationspartner (Servicegeräte: z. B. Notebook oder PDA mit Infrarotschnittstelle nach dem Infrared Data Association Standard). Die Kontaktaufnahme kann dabei aktiv durch Aussenden optischer Kontaktaufnahmebotschaften oder passiv durch Überwachen optischer Aktivitäten durch das Erfassungsgerät erfolgen. In beiden Fällen wird hierfür Strom für den Betrieb einer Steuereinheit (in der Regel eines Mikrocontrollers) und eines optischen Senders bzw. Empfängers benötigt. Da die Schnittstelle nur für die Inbetriebnahme und das Ablesen durch Kundendienstpersonal benötigt wird, kann das beschriebene Verfahren genauso wie bei der Funkschnittstelle angewendet werden. Auch hier kann davon ausgegangen werden, dass zu bestimmten Tageszeiten und an Feiertagen kein Kundendienst erfolgt. Deswegen kann das An- und Abschaltverfahren zur Reduktion des Strombedarfs ohne Änderung auf die Zeitsteuerung der optischen Schnittstelle angewandt werden.

Zur weiteren Stromersparnis wird auch die Anzeige zeitweise abgeschaltet. Das Kriterium dafür, wann die Anzeige nicht benötigt wird und daher abgeschaltet werden kann, ist jedoch ein anderes. Eine Anzeige wird in der Regel nicht abgelesen, wenn es in der Umgebung dunkel ist oder keine Bewegung stattfindet. Da Erfassungsgeräte mit optischer Schnittstelle für die Kodierung (Daten in das Gerät hineinschreiben) bereits einen optischen Empfänger benötigen, wird bei diesen Geräten der optischen Empfänger mit einer Messvorrichtung verbunden. Andernfalls ist ein zusätzlicher Sensor notwendig. Die Messvorrichtung ist ein Analog-/Digitalumsetzer, der mit der Steuereinheit des Gerätes verbunden ist. A/D-Umsetzer sind in fast allen Erfassungsgeräten für die Anschaltung von Sensoren ohnedies erforderlich oder sie sind bereits in der Steuereinheit (Mikrocontroller) integriert. Bei Unterschreitung eines einer Grenzhelligkeit entsprechenden Schwellwertes wird dann die Anzeige deaktiviert, um den anteiligen Batteriestrom einzusparen. Die Feststellung, ob die Helligkeit über oder unter einem bestimmten Schwellwert liegt, kann dabei ereignisgesteuert erfolgen. Dies erspart ein regelmäßiges, wiederholtes Messen der Umgebungshelligkeit. Entsprechendes gilt für einen zusätzlich in das Gerät einzubauenden Bewegungssensor.

Durch das erfindungsgemäße Verfahren wird der anteilige Energiebedarf aus der Gerätebatterie für bestimmte abschaltbare Gerätefunktionen nennenswert reduziert. Dies führt bei gleicher Batteriekapazität zu einer Lebensdauerverlängerung des Gerätes und damit zu einer Reduktion der Betriebskosten pro Jahr. Alternativ gestattet es in der Produktion den Einsatz einer Langzeitbatterie kleinerer Kapazität und senkt bei gleicher Gerätelebensdauer die Herstellungskosten. Dabei werden physikalische Störeffekte, wie etwa die Ungenauigkeit von Zeitgeberelementen, berücksichtigt.

Durch das zeitweilige Abschalten der Funkaussendungen, insbesondere im Schnellsendemodus, wird in regelmäßigen Abständen das verwendete Frequenzband freigegeben. Dies begünstigt die störungsfreie Funkkommunikation konkurrierender Funksysteme auf dem selben Frequenzband. Ebenso wird durch die Abschaltung in kundendienstfreien Zeiten die Belastung durch Elektro-Smog herabgesetzt. Dies trifft insbesondere für die Anwesenheitszeiten des Nutzers während der Nacht und an Feiertagen zu.

Bei Erfassungsgeräten mit optischer Schnittstelle und Anzeigeeinheit nutzt das beschriebene Verfahren kostenneutral den optischen Empfänger einer Serviceschnittstelle, um die Umgebungshelligkeit zu detektieren und daraus ein Kriterium für die An- und Abschaltung der Anzeige zu gewinnen. Es verzichtet auf unnötige Bedienelemente und ist nicht an den Zählfortschritt gekoppelt, da dieser für die Gerätegattung Verbrauchserfassungsgeräte ungeeignet ist.

## Patentansprüche

1. Verfahren zum Abschalten zeitweise nicht benötigter Funktionseinheiten eines elektronischen Verbrauchsdatenerfassungsgeräts mit drahtloser Übertragung der Verbrauchsdaten, bei dem die Datenübertragung zeitgesteuert an- und abgeschaltet wird, wobei das zeitgesteuerte An- und Abschalten vom Wochentag und/oder der Tageszeit abhängt, **dadurch gekennzeichnet, dass** der Anschaltzeitpunkt der Datenübertragung täglich um eine vorgebbare Zeitspanne vorgezogen und der Abschaltzeitpunkt täglich um eine vorgebbare Zeitspanne nach hinten verschoben wird.

2. Verfahren nach Anspruch 1, **dadurch gekennzeichnet, dass** die An- und Abschaltzeitpunkte für die Datenübertragung und/oder die vorgebbare Zeitspanne in dem Verbrauchsdatenerfassungsgerät einstellbar ist, insbesondere durch Programmierung über eine Serviceschnittstelle und/oder bei der Herstellung.

3. Verfahren nach einem der Ansprüche 1 oder 2, **dadurch gekennzeichnet, dass** eine Anzeige des Verbrauchsdatenerfassungsgeräts in Abhängigkeit von Umgebungsvariablen des Verbrauchsdatenerfassungsgeräts, insbesondere Helligkeit und/oder Bewegung, an- und abgeschaltet wird.

4. Verfahren nach Anspruch 3, **dadurch gekennzeichnet, dass** das Messen der Umgebungsvariablen ereignisgesteuert erfolgt.

5. Verbrauchsdatenerfassungsgerät mit einer Steuereinrichtung, insbesondere einem Mikrocontroller oder Mikroprozessor, das eine Zeitsteuerung aufweist, **dadurch gekennzeichnet, dass** die Steuereinrichtung programmtechnisch zur Durchführung eines Verfahrens nach einem der Ansprüche 1 bis 4 eingerichtet ist.

6. Verbrauchsdatenerfassungsgerät nach Anspruch 5, **dadurch gekennzeichnet, dass** das Verbrauchsdatenerfassungsgerät ein Messsystem zur Messung von Umgebungsvariablen, insbesondere von Helligkeit und/oder Bewegung, aufweist.

7. Verbrauchsdatenerfassungsgerät nach Anspruch 6, **dadurch gekennzeichnet, dass** das Messsystem zur Messung der Helligkeit einen auch zum optischen Datenempfang geeigneten optischen Empfänger, insbesondere einen Infrarotsensor, und einen Analog-Digital-Wandler aufweist.

## Claims

1. Method for switching off temporarily not needed functional units of an electronic utility meter with wireless transmission of the consumer data, in which the data transmission is switched on and off in a time-controlled manner, the time-controlled switching on and off being dependent on the day of the week and/or the time of day, **characterized in that** the time at which the data transmission is switched on is brought forward each day by a pre-definable time period and the time at which it is switched off is shifted backward each day by a pre-definable time period.

2. The method according to Claim 1, **characterized in that** the times at which the data transmission is switched on and off and/or the pre-definable time period can be set in the electronic utility meter, in particular by means of programming over a service interface and/or during production.

3. The method according to one of Claims 1 or 2, **characterized in that** a display of the electronic utility meter is switched on and off in accordance with environmental variables of the electronic utility meter, in particular brightness and/or movement.

4. The method according to Claim 3, **characterized in that** the measurement of the environmental variables is event-controlled.

5. An electronic utility meter with a control device, in particular a microcontroller or microprocessor, which comprises a time controller, **characterized in that** the control device is equipped with programming technology for carrying out a method according to one of Claims 1 to 4.

6. The electronic utility meter according to Claim 5, **characterized in that** the electronic utility meter comprises a measurement system for measuring environmental variables, in particular brightness and/or movement.

7. The electronic utility meter according to Claim 6, **characterized in that** the measurement system for measuring the brightness comprises an optical receiver that is also suitable for receiving optical data, in particular an infrared sensor, and an analogue-digital converter.

## Revendications

1. Procédé pour connecter des unités fonctionnelles non utilisées par moments d'un appareil électronique d'enregistrement de données de consommation avec transmission sans fil des données de consommation, dans lequel la transmission de données est connectée et déconnectée en fonction du temps, la connexion et déconnexion commandées en fonction du temps dépendant du jour de la semaine et/ou de l'heure du jour, **caractérisé en ce que** le moment de connexion de la transmission de données est avancé quotidiennement d'un laps de temps prédéfinissable et le moment de déconnexion retardé quotidiennement d'un laps de temps prédéfinissable.

2. Procédé selon la revendication 1, **caractérisé en ce que** les moments de connexion et de déconnexion pour la transmission de données et/ou le laps de temps prédéfinissable peuvent être réglés dans l'appareil d'enregistrement de données de consommation, en particulier par programmation au moyen d'une interface de service et/ou lors de la fabrication.

3. Procédé selon l'une quelconque des revendications 1 ou 2, **caractérisé en ce qu'**un affichage de l'appareil d'enregistrement de données de consommation est connecté et déconnecté en fonction des variables d'environnement de l'appareil d'enregistrement de données de consommation, en particulier la luminosité et/ou le mouvement.

4. Procédé selon la revendication 3, **caractérisé en ce que** la mesure des variables d'environnement s'effectue de façon commandée par l'événement.

5. Appareil d'enregistrement de données de consommation comprenant un dispositif de commande, en particulier un microcontrôleur ou microprocesseur, qui présente une commande de temps, **caractérisé en ce que** le dispositif de commande est équipé au niveau de la technique de programme pour la mise en oeuvre d'un procédé selon l'une quelconque des revendications 1 à 4.

6. Appareil d'enregistrement de données de consommation selon la revendication 5, **caractérisé en ce que** l'appareil d'enregistrement de données de consommation présente un système de mesure pour la mesure de variables d'environnement, en particulier la luminosité et/ou le mouvement.

7. Appareil d'enregistrement de données de consommation selon la revendication 6, **caractérisé en ce que** le système de mesure pour la mesure de la luminosité présente un récepteur optique approprié pour la réception de données optiques, en particulier un capteur infrarouge, et un convertisseur analogique-numérique.
